# EUROPEAN PATENT SPECIFICATION

(11) **EP 3 034 410 B1**
(45) Date of publication and mention of the grant of the patent: **01.03.2017**
(21) Application number: 14382523.0
(22) Date of filing: 16.12.2014
(51) Int. Cl.: B64F 1/06, B64F 1/08

(54) **Take-off system and method for unmanned aerial vehicles**
Startsystem und -verfahren für unbemannte Luftfahrzeuge
Système et procédé de décollage de véhicules aériens sans pilote

(43) Date of publication of application: 22.06.2016
(73) Proprietor: The Boeing Company, Chicago, IL 60606-1596 (US)
(72) Inventor: Serrot Hauke, Enrique Emilio, 28042 Madrid (ES); Ferreyra, Eduardo Gabriel, 28042 Madrid (ES); Lemus Martín, Jose Luis, 28042 Madrid (ES); Blanco Del Álamo, Jose Antonio, 28042 Madrid (ES); Lapeña Rey, Nieves, 28042 Madrid (ES)
(74) Representative: Carvajal y Urquijo, Isabel

(56) References cited:
- WO-A1-2005/058698
- FR-A- 1 432 258
- GB-A- 2 132 577
- US-A- 3 599 905

## Description

### FIELD OF THE INVENTION

The present disclosure presents a method and a system for the take-off of Unmanned Aerial Vehicles (UAV's), which makes use of a winch and a dolly for the UAV to gain enough velocity so that it be able to take-off leaving the dolly.

The system and method of the present disclosure are applicable in the field of Aeronautic Engineering and, more particularly, in the field of UAV-related Electronics and Automatic Regulation.

### BACKGROUND OF THE INVENTION

Take-off of Unmanned Aerial Vehicles (UAV's) is in some cases performed by using a winch towing a dolly on which the aircraft is mounted and carried until its speed is high enough to rotate and take-off. This method is used in order to save energy for the flight and/or to keep a clean and lighter configuration of the aircraft, avoiding the use of a heavy and bulky landing gear.

The use of this method usually involves a winch operator, who must coordinate with the manual pilot in order to start the system just prior to the take-off and to stop it once the plane has lifted off from the dolly.

A system like the one previously described is disclosed in European Patent application EP 14382030.6.

However, the system disclosed in the mentioned patent application involves, as has been said, a dedicated person who is in charge of managing the winch and coordinating with the aircraft's pilot (be it either a manual pilot, an autopilot or a Ground Control Station (GCS)) in order to perform a safe take-off for the aircraft.

Apart from the fact of this task being quite cumbersome for a human winch operator, there are several safety aspects that must be taken into consideration when analyzing the performance of a system like the one mentioned above. Firstly, one should notice the possible misunderstandings that may occur among the aircraft's pilot and the winch operator during take-off maneuvers.

Secondly, and more importantly, any emergencies or malfunctions arising during a take-off maneuver have to be rapidly recognized and communicated from the aircraft's pilot to the winch operator, in order for the winch operator to stop the winch so that it does not continue towing the dolly, thus aborting the take-off in time.

The response time in these events is critical, and it is important that it be as short as possible, preferably not exceeding a few seconds.

Other safety aspects that should be taken into consideration when managing a system like the one previously described, is the necessity of checking the winch battery level, so as to ensure, prior to the aircraft's take-off, that the battery level is high enough to carry on an entire take-off cycle, involving the deployment and further roll-up of the towline.

Measuring the deployed towline is another task which is crucial for a safe take-off, because this allows knowing the runway available for the dolly, in order for the aircraft to have sufficient time to gain velocity and take off. This task must also be carried out by the winch operator in the system described.

In the cases where aborting the take-off of the aircraft be necessary, one should bear in mind that the conditions surrounding the aircraft might be unexpectedly worse than usually (gusting wind may take place, and ambient noise could influence the communications among the pilot and the winch operator). This implies the criticality of a prompt response taken by the aircraft, and the necessity of good communication channels among the pilot and the winch operator. However, a rapid and timely response may sometimes be difficult to achieve, which can lead to a failed take-off and a damage caused to the aircraft.

With respect to the prior art, document GB 2132577 A may be acknowledged. This document discloses a launcher for a remotely piloted aircraft. Document US 3599905 A may also be acknowledged. This document discloses a system for servicing an aircraft during launch or recovery operations. Lastly, document FR 1432 258 A may also be acknowledged. This document discloses a device for launching or catapulting a vehicle, such as an aircraft.

### DESCRIPTION OF THE INVENTION

In order to provide an enhanced solution that avoids the problems mentioned above, the present disclosure provides a novel system and corresponding method for the take-off of Unmanned Aerial Vehicles (UAV's).

According to a preferred embodiment of the system of the disclosure, the take-off system for Unmanned Aerial Vehicles comprises at least one winch, at least one towline, at least one dolly on which at least one aircraft is mounted, and at least one battery of the at least one winch.

According to a preferred embodiment of the system of the disclosure, the take-off system additionally comprises at least one microcontroller unit connected to the at least one winch, wherein the at least one microcontroller unit is configured for controlling the take-off system.

In particular, the microcontroller unit is configured for controlling the activation/deactivation of the at least one winch.

However, as already introduced, the microcontroller unit may be configured for monitoring and controlling several parameters regarding the performance of the whole take-off system, for example speeds and accelerations, distances, battery level and battery consumption rates, etc.

The take-off system of the disclosure also comprises at least one radio receiver unit connected to the at least one microcontroller unit, wherein the at least one microcontroller unit is configured to activate/deactivate the at least one winch at the reception (by the radio receiver unit) of corresponding take-off command from a radio transmitter.

The mentioned radio transmitter is the radio with which a pilot commands the UAV.

According to a preferred embodiment of the system of the disclosure, the take-off system for Unmanned Aerial Vehicles comprises at least one display showing performance parameters of the at least one winch.

The mentioned display is preferably a liquid crystal display.

The take-off system also comprises, according to a preferred embodiment thereof, at least one encoder connected both to the at least one winch and to the at least one microcontroller unit, wherein the microcontroller unit is configured to count the number of roll-up cycles performed by the at least one winch, from signals (typically pulses corresponding to winch turns) sent from the at least one encoder to the at least one microcontroller unit.

According to a preferred embodiment of the take-off system, the at least one microcontroller unit is configured to count the deployed distance of the at least one towline, from signals sent from the at least one encoder to the at least one microcontroller unit.

The remaining take-off run available for the at least one dolly, within each take-off cycle, may also be counted by the at least one microcontroller unit (also configured therefor), from signals sent from the at least one encoder to the at least one microcontroller unit.

The at least one microcontroller unit is configured, according to a preferred embodiment of the take-off system, to measure the rolling-up speed and acceleration of the towline, from signals sent from the at least one encoder to the at least one microcontroller unit.

Furthermore, according to a preferred embodiment of the take-off system of the disclosure, the take-off system comprises at least one alarm indicator, for indicating that safety parameters concerning system performance are out of permitted limits.

In particular, the alarm indicator is configured for indicating that safety parameters concerning winch performance are out of permitted limits.

As has already been introduced, the present disclosure also presents a take-off method for Unmanned Aerial Vehicles.

The take-off method of the disclosure comprises using at least one dolly on which at least one aircraft is mounted and towing the at least one dolly by means of at least one winch.

The take-off method comprises operating the at least one winch by means of at least one microcontroller unit connected to said at least one winch.

Thus, according to the take-off method for Unmanned Aerial Vehicles (UAV's) object of the present disclosure, which makes use of a take-off system comprising the at least one dolly on which at least one aircraft is mounted, the at least one winch towing the at least one dolly by means of at least one towline, at least one battery of the at least one winch and at least one encoder connected both to the at least one winch and to the at least one microcontroller unit, the method further comprises:
a) initializing the take-off system;
b) checking level of the battery of the winch;
c) checking number of roll-up cycles performed by the winch;
d) deploying the towline from the winch;
e) incrementing count of deployed towline distance, by means of the at least one microcontroller unit, by means of signals sent from the at least one encoder (connected to the at least one winch) to the at least one microcontroller unit;
f) incrementing take-off run count as a function of the deployed towline distance;
g) arming the system for take-off;
h) detecting, by means of at least one radio receiver unit connected to the at least one microcontroller unit, a first radio signal comprising a take-off command, the first radio signal sent from a radio transmitter to the aircraft;
i) activating the winch;
j) starting the take-off sequence;
k) checking the rolling-up acceleration of the towline;
l) checking the remaining take-off run available for the dolly;
m) detecting, by means of the at least one radio receiver unit, a second radio signal comprising a lift-up command, the second radio signal sent from a radio transmitter to the aircraft;
n) ending the take-off sequence.

According to a preferred embodiment of the take-off method, the method finishes without starting the take-off sequence if, after checking the winch battery level, it is found that said winch battery level is under a certain predetermined limit.

Also according to a preferred embodiment of the take-off method, the method finishes without starting the take-off sequence if, after checking the number of roll-up cycles performed by the winch, it is found that said number of roll-up cycles performed by the winch is above a certain predetermined limit.

According to a preferred embodiment of the method, at least one alarm indicator of the take-off system indicates that the winch battery level is under a certain predetermined limit and/or at least one alarm indicator indicates that the number of roll-up cycles performed by the winch is above a certain predetermined limit.

Preferably, if after checking the rolling-up acceleration of the towline it is found that the rolling-up acceleration of the towline is under or above certain predetermined acceleration values, the winch stops rolling up the towline and the method finishes aborting the aircraft's take-off.

Also preferably, if after checking the remaining take-off run available for the dolly it is found that the remaining take-off run available for the dolly is under a certain predetermined distance value, the winch stops rolling up the towline and the method finishes aborting the aircraft's take-off.

The method finishes, according to a preferred embodiment thereof, after a predetermined period of time from detecting the second radio signal comprising the lift-up command. Thus, the winch stops rolling-up the towline and towing the dolly.

Moreover, if no second radio signal comprising a lift-up command is detected by the radio receiver unit, the method returns to step "k)" previously described.

The method finishes aborting the aircraft's take-off if a stop command is detected by the radio receiver unit at any time.

### BRIEF DESCRIPTION OF THE FIGURES

Figure 1: shows the elements comprising current take-off systems for UAV's, involving the use of a winch and a dolly.
Figure 2: shows a schematic diagram of the main components of the take-off system for UAV's object of the present disclosure.
Figure 3: shows a first part of a flow chart comprising the main steps of the take-off method for UAV's, object of the present disclosure.
Figure 4: shows a second part of a flow chart comprising the main steps of the take-off method for UAV's, object of the present disclosure.
Figure 5: shows a third part of a flow chart comprising the main steps of the take-off method for UAV's, object of the present disclosure.

### DESCRIPTION OF AN EXEMPLARY EMBODIMENT

The following is a description of an embodiment of the system and method of the disclosure, making reference to the Figures.

The present disclosure, as has already been introduced, describes a system and a method for the take-off of Unmanned Aerial Vehicles (UAV's).

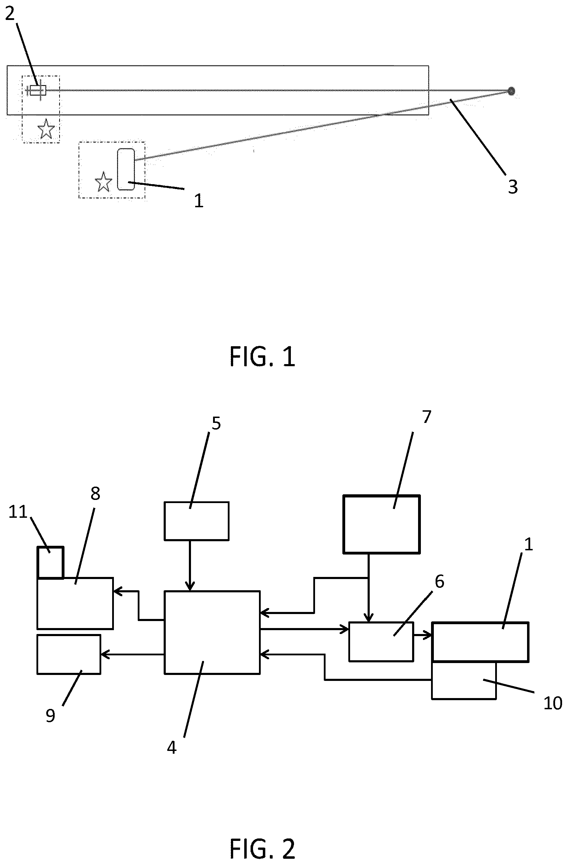

The system is based on a conventional take-off system, schematically depicted in Figure 1, comprising a dolly (2) towed by a towline (3) and a winch (1). The towline (3) goes from the winch (1) through a pulley, until the dolly (2). The stars shown in Figure 1 represent the winch operators and the aircraft's pilot (either a manual pilot, an auto-pilot or a Ground Control Station).

The system for the take-off of UAV's according to the present disclosure comprises:
- -: a winch (1);
- -: a dolly (2);
- -: a towline (3);
- -: a microcontroller unit (4);
- -: a radio receiver unit (5);
- -: an electronic relay (6);
- -: a battery (7);
- -: a display (8);
- -: control buttons (9);
- -: an encoder (10);
- -: a Ground Control Station (GCS) and/or a Manual Pilot (MP).

Most of these elements are schematically depicted in Figure 2.

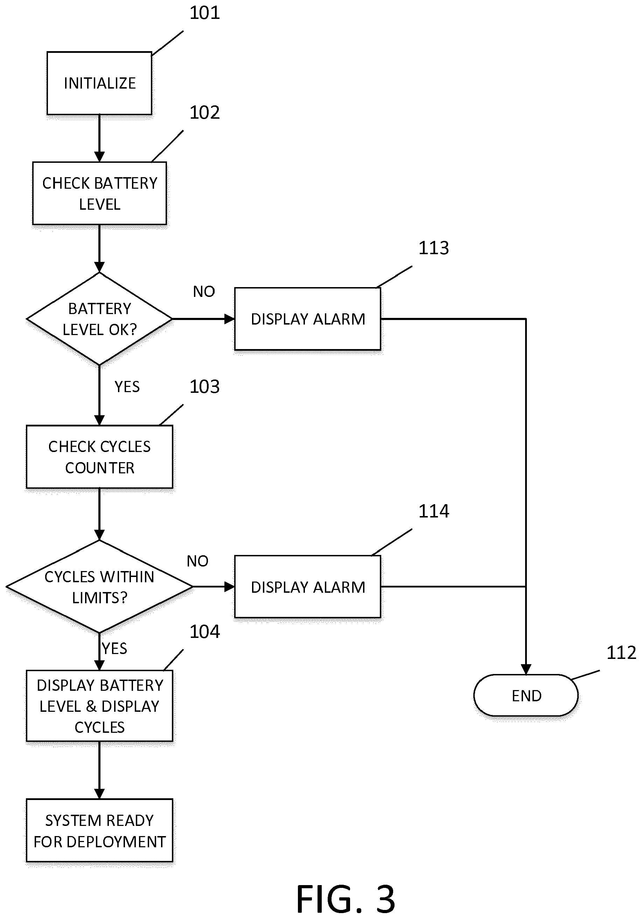

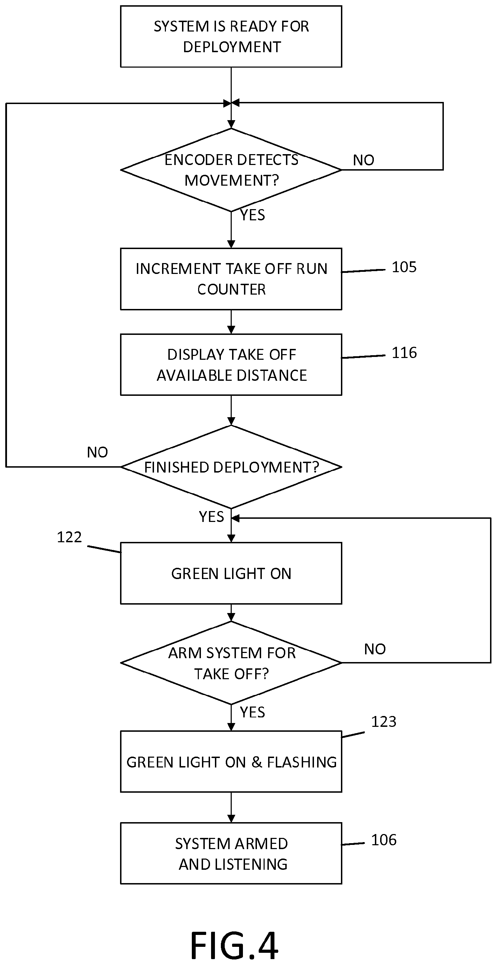

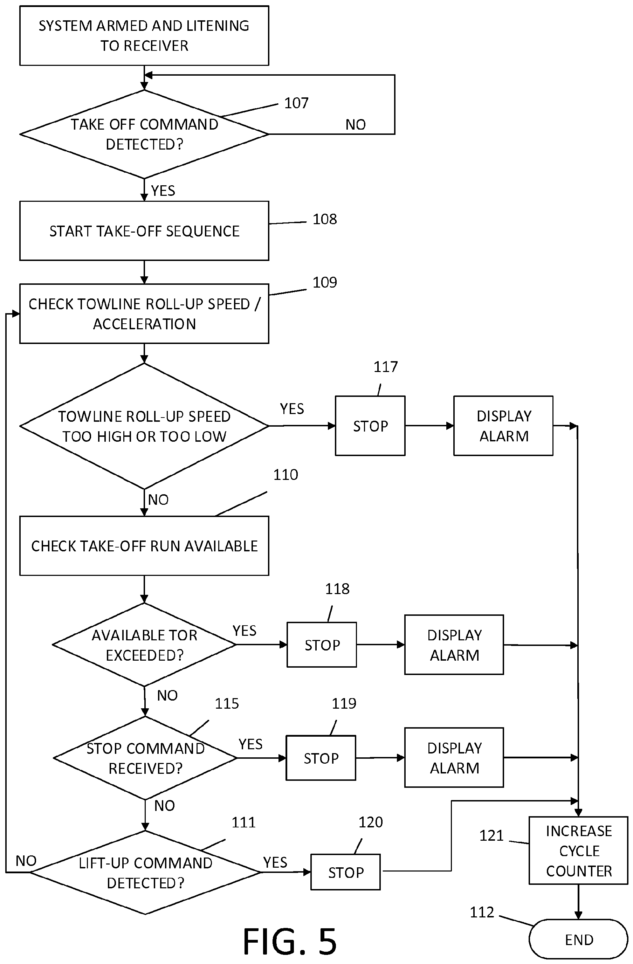

Furthermore, the method for the take-off of UAV's according to the present disclosure typically comprises the following steps, schematically depicted in Figures 3, 4 and 5:
- initializing (101) the take-off system;
- checking (102) the level of the battery (7) of the winch (1);
- checking (103) the number of roll-up cycles performed by the winch (1);
- displaying (104) the battery (7) level on a display (8);
- displaying (104) on a display (8), either the number of roll-up cycles already performed by the winch (1) since its last inspection took place, or the number of roll-up cycles remaining until the next inspection of the winch (1) is due;
- deploying the towline (3) from the winch (1);
- incrementing (105), by means of the microcontroller unit (4) connected to the encoder (10) (which in turn is connected to the winch), the take-off run count as a function of the deployed towline (3) distance;
- arming (106) the take-off system for the take-off;
- receiving (107), by means of the radio receiver unit (5), a first radio signal from a radio transmitter, indicating the start of the take-off; a take-off command comprised within the first radio signal activates the winch (1);
- starting (108) the take-off sequence;
- checking (109) the rolling-up speed and/or acceleration of the towline (3), by means of the microcontroller unit (4) connected to the encoder (10);
- checking (110) the remaining take-off run (TOR) available for the dolly (2);
- checking (111) whether a second radio signal is received by the radio receiver unit (5), the second radio signal comprising a lift-up command for the aircraft;
- ending (112) take-off sequence;

Most of the above steps are typically performed automatically, by means of a take-off system as the one described at the beginning of this description of an exemplary embodiment.

However, the step concerning the deployment of the towline (3) from the winch (1) is typically performed manually, by a human operator.

Additionally, it must be observed that the steps taking place between the starting (108) of the take-off sequence until the end (112) of the take-off sequence are performed sequentially, and they are repeated typically several times per second.

According to the method of the disclosure, whenever the take-off system is initialized (101), a battery (7) check (102) is performed in order to ensure that the battery (7) level of the winch (1) is sufficient to carry out the entire take-off sequence, so that there will be no risk that either the take-off suffers from a sudden stop, or the acceleration of the dolly (2) does not reach and maintain at a value sufficient for the aircraft to reach the necessary take-off speed within the take-off run (TOR) available.

If it is detected that the battery (7) level is insufficient for the winch (1) to perform a reliable take-off of the UAV, then the take-off is aborted before it starts, and the method finishes (112). In this case, according to a preferred embodiment of the system and method of the disclosure, an alarm indicator (11) indicating insufficient battery (7) level is activated (113) and/or shown on the display (8) of the take-off system.

On the contrary, if it is detected that the battery (7) level is sufficient to correctly and safely perform the take-off of the UAV, then a check (103) is performed in order to verify whether the winch (1) roll-up cycles have exceeded a predetermined value or cycles' limit. This limit establishes a safety threshold for the number of take-offs performed by the winch (1). If the number of roll-up cycles that have been carried out by the winch (1) exceeds the predetermined limit, that means the winch (1) should undergo an inspection before coming again into operation, and therefore the take-off is aborted before it starts, and the method finishes (112). In this case, according to a preferred embodiment of the system and method of the disclosure, an alarm indicator (11) indicating that the number of take-off cycles (or roll-up cycles performed by the winch (1)) has exceeded the predetermined limit, is activated (114) and/or shown on the display (8) of the take-off system.

In case the system undergoes an inspection (due to the number of roll-up cycles performed by the winch (1) be exceeding the predetermined cycles' limit), then, after having inspected the winch (1) (and maybe having replaced or repaired any of the winch's components), the count indicating the number of roll-up cycles performed by the winch (1) may be reset, starting a new count. This task is preferably performed by the microcontroller unit (4) and/or by an operator.

According to a preferred embodiment of the system and method of the disclosure, the battery (7) level and the number of roll-up cycles already performed by the winch (1) are shown (104) in the take-off system's display (8).

After having verified that both the battery (7) level and the number of roll-up cycles carried out by the winch (1) are within the limits permitted, the towline (3) is deployed.

The encoder (10) sends signals to the microcontroller unit (4) which in turn counts the deployed towline (3) distance. Thus, the microcontroller unit (4) calculates both the deployed distance of the towline (3) and the take-off run (TOR) available for the dolly (2) (as a function of the deployed towline (3) distance). The take-off run (TOR) available for the dolly (2) is then typically depicted (116) on a display.

After having deployed the towline (3), the take-off system is armed (106), thus becoming ready for starting (108) the take-off sequence; the radio receiver unit (5) is activated, waiting for any radio signal that a manual pilot, an autopilot or a Ground Control System (GCS) in charge of controlling the UAV might transmit.

According to an exemplary embodiment of the take-off system and method, after having deployed the towline (3), a light indicator (for example, a green light) is switched on (122); when arming the system, the mentioned green light starts flashing (123).

According to a preferred embodiment of the method of the disclosure, the radio receiver unit (5) detects (107) a first radio signal, either sent from a manual pilot, an autopilot or a Ground Control Station (GCS), via any radio transmitter. This first radio signal informs the take-off system of the intention of the UAV pilot of starting the take-off.

When a first radio signal indicating a take-off command is detected (107) by the radio receiver unit (4), then the microcontroller unit (4) sends an order to the winch (1), via the electronic relay (6), thus activating the winch (1), that starts rolling up the towline (3) towing the dolly (2). Therefore, the dolly (2) starts accelerating while carrying the UAV.

A check (109) of the towline (3) roll-up speed and/or acceleration is performed continuously by the microcontroller unit (4) (thanks to the signals sent thereto by the encoder (10) connected to the winch (1)), in order to verify that the take-off system is working properly (that is, the towline (3) is being rolled-up at a correct acceleration) and to ensure that the speed is sufficient for the UAV to lift up, so that the UAV can perform a safe take-off.

Thanks to the check (109) of the towline (3) rolling-up speed/acceleration, it can be verified both that no obstacle is obstructing the acceleration of the dolly (2) (which would provoke that the towline (3) rolling-up speed/acceleration were under the predetermined speed limits), and that the towline (3) has not been disconnected from the dolly (2) (which would provoke that the towline (3) rolling-up speed/acceleration were above the predetermined speed limits).

If after a predetermined amount of time, the towline (3) roll-up acceleration is out of predetermined limits, the winch (1) stops (117) rolling up the towline (3), thus aborting the take-off of the UAV, and the method finishes (112).

When the rolling-up acceleration of the towline (3) is found to be within predetermined limits, then it is checked (110) whether the remaining take-off run (TOR) available is sufficient for the UAV to start rotating and perform a reliable and safe take-off. If the remaining take-off run (TOR) available is found not sufficient to ensure enough time for the UAV to start rotating and perform a safe take-off, the winch (1) stops (118) rolling up the towline (3), thus aborting the take-off, and the method finishes (112).

As mentioned above, the checking steps ranging from the starting (108) of the take-off sequence up to the end (112) of the take-off sequence are performed continuously, typically several times per second.

When the manual pilot acts over an elevator channel of the dolly (2) in a nose up direction to rotate the aircraft for take-off, a second radio signal is detected (111) by the radio receiver unit (5) and then read by the microcontroller unit (4), which sends an order to the winch (1), via the electronic relay (6), for stopping (120) the rolling-up of the towline (3) after a preprogrammed time, so as to leave enough time for the aircraft to rotate and leave the dolly (2) for the climb.

If, at any time during the take-off sequence, a stop command explicitly indicating that the take-off must be aborted is detected (115) by the radio receiver unit (5), the winch (1) stops (119) rolling up the towline (3), thus aborting the take-off and finishing (112) the method.

In the event of an aborted take-off, this can be performed manually either by the manual pilot, the autopilot or the GCS by sending via radio a stop command, which is received (115) by the radio receiver unit (5), as described previously.

In addition, the aborted take-off can be performed either by the manual pilot, the autopilot or the GCS, simply by not starting the rotation of the UAV. Thus, a second radio signal indicating a lift-up command is not detected (111) by the radio receiver unit (5) of the take-off system and the method continues by performing again a check (109, 110) of both the rolling-up speed of towline (3) and the remaining take-off run (TOR) available. If the latter is found insufficient, the winch (1) stops (118) rolling up the towline (3), thus aborting the take-off, and the method finishes (112).

As has been mentioned previously, according to a preferred embodiment of the take-off system, the take-off system comprises an electronic relay (6) through which the microcontroller unit (4) activates/deactivates the winch

According to a preferred embodiment of the take-off method of the disclosure, the count indicating the number of roll-up cycles performed by the winch (1) is increased (121) before ending (112) the take-off sequence.

## Claims

1. Take-off system for Unmanned Aerial Vehicles comprising a winch (1), a towline (3), and a dolly (2) on which an Unmanned Aerial Vehicle can be mounted, **characterized in that** the take-off system additionally comprises a microcontroller unit (4) connected to the winch (1), configured for controlling activation/deactivation of the winch (1), wherein the take-off system additionally comprises a radio receiver unit (5) connected to the microcontroller unit (4), wherein the microcontroller unit (4) is configured to activate/deactivate the winch (1) at the reception of a take-off command from a radio transmitter, with which a pilot commands the Unmanned Aerial Vehicle.

2. Take-off system for Unmanned Aerial Vehicles according to claim 1, **characterized in that** it comprises a display (8) showing performance parameters of the winch (1).

3. Take-off system for Unmanned Aerial Vehicles according to claim 1, **characterized in that** it comprises at least one encoder (10) connected to the winch (1) and to the microcontroller unit (4).

4. Take-off system for Unmanned Aerial Vehicles according to claim 3, **characterized in that** the microcontroller unit (4) is configured to count the number of roll-up cycles performed by the winch (1), from signals sent from the encoder (10) to the microcontroller unit (4).

5. Take-off system for Unmanned Aerial Vehicles according to claim 3, **characterized in that** the microcontroller unit (4) is configured to count the deployment distance of the towline (3), from signals sent from the encoder (10) to the microcontroller unit (4).

6. Take-off system for Unmanned Aerial Vehicles according to claim 3, **characterized in that** the microcontroller unit (4) is configured to count the remaining take-off run available for the dolly (2), from signals sent from the encoder (10) to the microcontroller unit (4).

7. Take-off system for Unmanned Aerial Vehicles according to claim 3, **characterized in that** the microcontroller unit (4) is configured to measure the rolling-up speed and/or acceleration of the towline (3), from signals sent from the encoder (10) to the microcontroller unit (4).

8. Take-off system for Unmanned Aerial Vehicles according to claim 1, **characterized in that** it comprises at least one alarm indicator (11), for indicating that safety parameters concerning winch(1) performance are out of permitted limits.

9. Take-off method for Unmanned Aerial Vehicles making use of a take-off system according to any preceding claim, further comprising a battery (7) of the winch (1), **characterized in that** the method comprises:
a) initializing (101) the take-off system;
b) checking (102) level of the battery (7) of the winch (1);
c) checking (103) number of roll-up cycles performed by the winch (1);
d) deploying the towline (3) from the winch (1);
e) incrementing count of deployed towline (3) distance;
f) incrementing (105) take-off run count as a function of the deployed towline (3) distance;
g) arming (106) system for take-off;
h) detecting (107), by means of a radio receiver unit (5) connected to the microcontroller unit (4), a first radio signal comprising a take-off command, the first radio signal sent from a radio transmitter;
i) activating the winch (1);
j) starting (108) take-off sequence;
k) checking (109) rolling-up speed and/or acceleration of the towline (3);
l) checking (110) remaining take-off run available for the dolly (2);
m)detecting (111), by means of the radio receiver unit (5), a second radio signal comprising a lift-up command, the second radio signal sent from a radio transmitter;
n) ending (112) take-off sequence.

10. Take-off method for Unmanned Aerial Vehicles according to claim 9, **characterized in that** the method finishes (112) without starting the take-off sequence if, after checking (102) the winch (1) battery (7) level, it is found that said winch (1) battery (7) level is under a certain predetermined limit.

11. Take-off method for Unmanned Aerial Vehicles according to claim 9, **characterized in that** the method finishes (112) without starting the take-off sequence if, after checking (103) the number of roll-up cycles performed by the winch (1), it is found that said number of roll-up cycles performed by the winch (1) is above a certain predetermined limit.

12. Take-off method for Unmanned Aerial Vehicles according to claim 9, **characterized in that** at least one alarm indicator (11) of the take-off system indicates (113) that the winch (1) battery (7) level is under a certain predetermined limit and/or at least one alarm indicator (11) indicates (114) that the number of roll-up cycles performed by the winch (1) is above a certain predetermined limit.

13. Take-off method for Unmanned Aerial Vehicles according to claim 9, **characterized in that** if after checking (109) the rolling-up acceleration of the towline (3) it is found that the rolling-up acceleration of the towline (3) is under/above certain predetermined acceleration values, the winch (1) stops (117) rolling up the towline (3) and the method finishes (112) aborting the aircraft's take-off.

14. Take-off method for Unmanned Aerial Vehicles according to claim 9, **characterized in that** if after checking (110) the remaining take-off run available for the dolly (2) it is found that the remaining take-off run available for the dolly (2) is under a certain predetermined distance value, the winch (1) stops (118) rolling up the towline (3) and the method finishes (112) aborting the aircraft's take-off.

15. Take-off method for Unmanned Aerial Vehicles according to claim 9, **characterized in that** the method finishes (112) after a predetermined period of time from detecting (111) the second radio signal comprising a lift-up command.

16. Take-off method for Unmanned Aerial Vehicles according to claim 9, **characterized in that** if no second radio signal comprising a lift-up command is detected (111) by the radio receiver unit (5), the method returns to step "k)".

17. Take-off method for Unmanned Aerial Vehicles according to claim 9, **characterized in that** the method finishes (112) aborting the aircraft's take-off if a stop command is detected (115) by the radio receiver unit (5) at any time.

## Patentansprüche

1. Startsystem für unbemannte Luftfahrzeuge umfassend eine Winde (1), eine Schleppleine (3) und einen Rollwagen (2), auf welchem ein unbemanntes Luftfahrzeug montiert werden kann, **dadurch gekennzeichnet, dass** das Startsystem zusätzlich eine Mikrocontrollereinheit (4) umfasst, welche mit der Winde (1) verbunden ist und dazu ausgebildet ist, die Aktivierung/Deaktivierung der Winde (1) zu steuern, wobei es zusätzlich eine Funkempfangseinheit (5) umfasst, welche mit der Mikrocontrollereinheit (4) verbunden ist, wobei die Mikrocontrollereinheit (4) dazu ausgebildet ist, die Winde (1) beim Empfangen eines Startbefehls aus einem Funksender, mit welchem ein Pilot das unbemannte Luftfahrzeug kommandiert, zu aktivieren/deaktivieren.

2. Startsystem für unbemannte Luftfahrzeuge nach Anspruch 1, **dadurch gekennzeichnet, dass** es einen Bildschirm (8) umfasst, welcher Leistungsparameter der Winde (1) zeigt.

3. Startsystem für unbemannte Luftfahrzeuge nach Anspruch 1, **dadurch gekennzeichnet, dass** es mindestens einen Encoder (10) umfasst, welcher mit der Winde (1) und mit der Mikrocontrollereinheit (4) verbunden ist.

4. Startsystem für unbemannte Luftfahrzeuge nach Anspruch 3, **dadurch gekennzeichnet, dass** die Mikrocontrollereinheit (4) dazu ausgebildet ist, die Anzahl von durch die Winde (1) durchgeführten Aufrollzyklen aus den Signalen zu zählen, welche vom Encoder (10) zur Mikrocontrollereinheit (4) gesendet wurden.

5. Startsystem für unbemannte Luftfahrzeuge nach Anspruch 3, **dadurch gekennzeichnet, dass** die Mikrocontrollereinheit (4) dazu ausgebildet ist, die Erstreckungsdistanz der Schleppleine (3) aus den Signalen zu zählen, welche vom Encoder (10) zur Mikrocontrollereinheit (4) gesendet wurden.

6. Startsystem für unbemannte Luftfahrzeuge nach Anspruch 3, **dadurch gekennzeichnet, dass** die Mikrocontrollereinheit (4) dazu ausgebildet ist, die restliche, für den Rollwagen (2) verfügbare Startstrecke aus den Signalen zu zählen, welche vom Encoder (10) zur Mikrocontrollereinheit (4) gesendet wurden.

7. Startsystem für unbemannte Luftfahrzeuge nach Anspruch 3, **dadurch gekennzeichnet, dass** die Mikrocontrollereinheit (4) dazu ausgebildet ist, die Aufrollgeschwindigkeit und/oder -beschleunigung der Schleppleine (3) aus den Signalen zu messen, welche vom Encoder (10) zur Mikrocontrollereinheit (4) gesendet wurden.

8. Startsystem für unbemannte Luftfahrzeuge nach Anspruch 1, **dadurch gekennzeichnet, dass** es mindestens eine Alarmanzeige (11) umfasst, um anzuzeigen, dass die Sicherheitsparameter bezüglich der Leistung der Winde (1) außerhalb der zulässigen Grenzen liegen.

9. Startverfahren für unbemannte Luftfahrzeuge, welche von einem Startsystem nach einem der vorhergehenden Ansprüche Gebrauch machen, zusätzlich umfassend einen Akku (7) der Winde (1), **dadurch gekennzeichnet, dass** das Verfahren Folgendes umfasst:
a) die Initialisierung (101) des Startsystems;
b) die Prüfung (102) des Stands des Akkus (7) der Winde (1);
c) die Prüfung (103) der Anzahl von durch die Winde (1) durchgeführten Aufrollzyklen;
d) die Erstreckung der Schleppleine (3) aus der Winde (1);
e) die Erhöhung des Zählerstands der erstreckten Distanz der Schleppleine (3);
f) die Erhöhung (105) des Zählerstands der Startstrecke in Abhängigkeit von der erstreckten Distanz der Schleppleine (3);
g) die Vorbereitung (106) des Systems für den Start;
h) die Detektion (107), mittels einer mit der Mikrocontrollereinheit (4) verbundenen Funkempfangseinheit (5), eines ersten Funksignals umfassend einen Startbefehl, des ersten aus einem Funksender gesendeten Funksignals;
i) die Aktivierung der Winde (1);
j) der Beginn (108) der Startsequenz;
k) die Prüfung (109) der Aufrollgeschwindigkeit und/oder -beschleunigung der Schleppleine (3);
l) die Prüfung (110) der restlichen, für den Rollwagen (2) verfügbaren Startstrecke;
m) die Detektion (111), mittels der Funkempfangseinheit (5), eines zweiten Funksignals umfassend einen Anhebebefehl, des zweiten aus einem Funksender gesendeten Funksignal;
n) die Beendigung (112) der Startsequenz.

10. Startverfahren für unbemannte Luftfahrzeuge nach Anspruch 9, **dadurch gekennzeichnet, dass** das Verfahren ohne den Beginn der Startsequenz endet (112), wenn es, nach der Prüfung (102) des Stands des Akkus (7) der Winde (1), festgestellt wird, dass der genannte Stand des Akkus (7) der Winde (1) unter einer gewissen vorgegebenen Grenze liegt.

11. Startverfahren für unbemannte Luftfahrzeuge nach Anspruch 9, **dadurch gekennzeichnet, dass** das Verfahren ohne den Beginn der Startsequenz endet (112), wenn es, nach der Prüfung (103) der Anzahl von durch die Winde (1) durchgeführten Aufrollzyklen, festgestellt wird, dass die genannte Anzahl von durch die Winde (1) durchgeführten Aufrollzyklen über einer gewissen vorgegebenen Grenze liegt.

12. Startverfahren für unbemannte Luftfahrzeuge nach Anspruch 9, **dadurch gekennzeichnet, dass** mindestens eine Alarmanzeige (11) des Startsystems anzeigt (113), dass der Stand des Akkus (7) der Winde (1) unter einer gewissen vorgegebenen Grenze liegt und/oder mindestens eine Alarmanzeige (11) anzeigt (114), dass die Anzahl von durch die Winde (1) durchgeführten Aufrollzyklen über einer gewissen vorgegebenen Grenze liegt.

13. Startverfahren für unbemannte Luftfahrzeuge nach Anspruch 9, **dadurch gekennzeichnet, dass**, wenn es, nach der Prüfung (109) der Aufrollbeschleunigung der Schleppleine (3), festgestellt wird, dass die Aufrollbeschleunigung der Schleppleine (3) unter/über gewissen vorgegebenen Beschleunigungswerten liegt, die Winde (1) aufhört (117) die Schleppleine (3) aufzurollen und das Verfahren endet (112) mit dem Abbruch des Starts des Fluggeräts.

14. Startverfahren für unbemannte Luftfahrzeuge nach Anspruch 9, **dadurch gekennzeichnet, dass**, wenn es, nach der Prüfung (110) der restlichen, für den Rollwagen (2) verfügbaren Startstrecke, festgestellt wird, dass die restliche, für den Rollwagen (2) verfügbare Startstrecke unter einem gewissen vorgegebenen Distanzwert liegt, die Winde (1) aufhört (118) die Schleppleine (3) aufzurollen und das Verfahren endet (112) mit dem Abbruch des Starts des Fluggeräts.

15. Startverfahren für unbemannte Luftfahrzeuge nach Anspruch 9, **dadurch gekennzeichnet, dass** das Verfahren nach einer vorgegebenen Zeitdauer nach der Detektion (111) des zweiten Funksignals umfassend einen Anhebebefehl endet (112).

16. Startverfahren für unbemannte Luftfahrzeuge nach Anspruch 9, **dadurch gekennzeichnet, dass**, wenn kein zweites Funksignal umfassend einen Anhebebefehl von der Funkempfangseinheit (5) detektiert wird (111), kehrt das Verfahren zurück zu Schritt "k)".

17. Startverfahren für unbemannte Luftfahrzeuge nach Anspruch 9, **dadurch gekennzeichnet, dass** das Verfahren mit dem Abbruch des Starts des Fluggeräts endet (112), wenn von der Funkempfangseinheit (5) ein Stopp-Befehl jederzeit detektiert wird (115).

## Revendications

1. Système de décollage de véhicules aériens sans pilote comprenant un treuil (1) un câble de remorque (3), et un chariot (2) sur lequel peut être monté un véhicule aérien sans pilote, **caractérisé en ce que**
le système de décollage comprend en outre une unité de micro-contrôle (4) connecté au treuil (1), configurée pour contrôler l'activation/désactivation du treuil (1), dans lequel le système de décollage comprend en outre une unité radio-réceptrice (5) connectée à l'unité de micro-contrôle (4), dans lequel l'unité de micro-contrôle (4) est configurée pour activer/désactiver le treuil (1) lors de la réception d'une commande de décollage en provenance d'un radio-transmetteur, avec lequel un pilote commande le véhicule aérien sans pilote.

2. Système de décollage de véhicules aériens sans pilote selon la revendication 1, **caractérisé en ce qu'**il comprend un viseur (8) affichant des paramètres de prestation du treuil (1).

3. Système de décollage de véhicules aériens sans pilote selon la revendication 1, **caractérisé en ce qu'**il comprend au moins un codeur (10) connecté au treuil (1) et à l'unité de micro-contrôle (4).

4. Système de décollage de véhicules aériens sans pilote selon la revendication 3, **caractérisé en ce que** l'unité de micro-contrôle (4) est configurée pour compter le nombre de cycles d'enroulement réalisés par le treuil (1) à partir des signaux envoyés à partir du codeur (10) à l'unité de micro-contrôle (4).

5. Système de décollage de véhicules aériens sans pilote selon la revendication 3, **caractérisé en ce que** l'unité de micro-contrôle (4) est configurée pour compter la distance de déploiement du câble de remorque (3), à partir des signaux envoyés à partir du codeur (10) à l'unité de micro-contrôle (4).

6. Système de décollage de véhicules aériens sans pilote selon la revendication 3, **caractérisé en ce que** l'unité de micro-contrôle (4) est configurée pour compter la distance de décollage restante disponible pour le chariot (2) à partir des signaux envoyés à partir du codeur (10) à l'unité de micro-contrôle (4).

7. Système de décollage de véhicules aériens sans pilote selon la revendication 3, **caractérisé en ce que** l'unité de micro-contrôle (4) est configurée pour mesurer la vitesse d'enroulement et/ou l'accélération du câble de remorque (3), à partir des signaux envoyés à partir du codeur (10) à l'unité de micro-contrôle (4).

8. Système de décollage de véhicules aériens sans pilote selon la revendication 1, **caractérisé en ce qu'**il comprend au moins un indicateur d'alarme (11), pour indiquer que les paramètres de sécurité concernant la prestation du treuil (1) sont en dehors des limites permises.

9. Procédé de décollage de véhicules aériens sans pilote utilisant un système de décollage selon l'une quelconque des revendications précédentes, comprenant en outre une batterie (7) du treuil (1) **caractérisé en ce que** le procédé comprend :
a) l'initialisation (101) du système de décollage ;
b) vérification (102) du niveau de la batterie (7) du treuil (1) ;
c) vérification (103) du nombre de cycles d'enroulement réalisés par le treuil (1) ;
d) déploiement du câble de remorque (3) à partir du treuil (1) ;
e) augmentation du comptage de la distance du câble de remorque (3) déployé ;
f) augmentation (105) du comptage de la distance de décollage en tant que fonction de la distance du câble de remorque (3) déployé ;
g) armement (106) du système de décollage ;
h) détection (107), par le biais d'une unité radio-réceptrice (5) connectée à l'unité de micro-contrôle (4), d'un premier signal radio comprenant une commande de décollage, le premier signal radio envoyé à partir d'un radio-transmetteur.
i) activation du treuil (1) ;
j) lancement (108) de la séquence de décollage ;
k) vérification (109) de la vitesse d'enroulement et/ou l'accélération du câble de remorque (3) ;
l) vérification (110) de la distance de décollage restante disponible pour le chariot (2) ;
m) détection (111), par le biais d'une unité radio-réceptrice (5) d'un deuxième signal radio comprenant une commande d'élévation, le deuxième signal radio envoyé à partir d'un radio-transmetteur.
n) fin (112) de la séquence.

10. Procédé de décollage de véhicules aériens sans pilote selon la revendication 9, **caractérisé en ce que** le procédé termine (112) sans le lancement de la séquence de décollage si, après la vérification (102) du niveau de la batterie (7) du treuil (1), il se trouve que ledit niveau de la batterie (7) du treuil (1) est inférieur à une certaine limite prédéterminée.

11. Procédé de décollage de véhicules aériens sans pilote selon la revendication 9, **caractérisé en ce que** le procédé termine (112) sans le lancement de la séquence de décollage si, après la vérification (103) du nombre de cycles d'enroulement réalisés par le treuil (1), il se trouve que ledit nombre de cycles d'enroulement réalisés par le treuil (1) est supérieur à une certaine limite prédéterminée.

12. Procédé de décollage de véhicules aériens sans pilote selon la revendication 9, **caractérisé en ce qu'**au moins un indicateur d'alarme (11) du système de décollage indique (113) que le niveau de la batterie (7) du treuil (1) est inférieur à une certaine limite prédéterminée et/ou au moins un indicateur d'alarme (11) indique (114) que le nombre de cycles d'enroulement réalisés par le treuil (1) est supérieur à une certaine limite prédéterminée.

13. Procédé de décollage de véhicules aériens sans pilote selon la revendication 9, **caractérisé en ce que**, si après la vérification (109) de l'accélération d'enroulement du câble de remorque (3), il se trouve que l'accélération d'enroulement du câble de remorque (3) est inférieure/supérieure à certaines valeurs d'accélération prédéterminés, le treuil (1) arrête (117) d'enrouler le câble de remorque (3) et le procédé se termine (112) en annulant le décollage de l'aéronef.

14. Procédé de décollage de véhicules aériens sans pilote selon la revendication 9, **caractérisé en ce que**, si après la vérification (110) de la distance de décollage restante disponible pour le chariot (2), il se trouve que la distance de décollage restante disponible pour le chariot (2) est inférieure à une certaine valeur de distance prédéterminé, le treuil (1) arrête (118) l'enroulement du câble de remorque (3) et le procédé se termine (112) en annulant le décollage de l'aéronef.

15. Procédé de décollage de véhicules aériens sans pilote selon la revendication 9, **caractérisé en ce que** le procédé se termine (112) après une période de temps prédéterminée à partir de la détection (111) du deuxième signal radio comprenant une commande d'élévation.

16. Procédé de décollage de véhicules aériens sans pilote selon la revendication 9, **caractérisé en ce que**, si aucun deuxième signal radio comprenant une commande d'élévation n'est détecté (111) par l'unité radio-réceptrice (5) le procédé retourne à l'étape « k) ».

17. Procédé de décollage de véhicules aériens sans pilote selon la revendication 9, **caractérisé en ce que** le procédé se termine (112) en annulant le décollage de l'aéronef si une commande d'arrêt est détectée (115) par l'unité radio-réceptrice (5) à un moment quelconque.
